# EUROPÄISCHE PATENTSCHRIFT

(11) **EP 2 865 944 B1**
(45) Veröffentlichungstag und Bekanntmachung des Hinweises auf die Patenterteilung: **07.03.2018**
(21) Anmeldenummer: 14185982.7
(22) Anmeldetag: 23.09.2014
(51) Int. Cl.: F23J 13/04, F16L 21/00

(54) **Rohrbride für Verbrennungsluftrohre sowie Abgasrohrsystem**
Pipe clamp for combustion air pipes and flue gas pipe system
Bride tubulaire pour tuyaux d'air de combustion ainsi que système de tuyau d'échappement

(30) Priorität: 23.10.2013 DE 102013111653
(43) Veröffentlichungstag der Anmeldung: 29.04.2015
(73) Patentinhaber: Bächle, Dieter, 8597 Landschlacht (CH)
(72) Erfinder: Bächle, Dieter, 8597 Landschlacht (CH)
(74) Vertreter: Patentanwälte Behrmann Wagner PartG mbB

(56) Entgegenhaltungen:
- DE-A1-102005 045 482
- FR-A1- 2 965 886
- US-A- 4 929 000
- US-A1- 2003 205 899

## Beschreibung

Die Erfindung betrifft eine Rohrbride gemäß dem Oberbegriff des Anspruchs 1 zum Umgreifen einer umlaufenden Stoßstelle zwischen zwei axial benachbarten Verbrennungsluftrohren eines Abgasrohrsystems einer Heizungsanlage. Bevorzugt handelt es sich bei der Rohrbride um ein Kunststoffteil, insbesondere um ein Kunststoffspritzgussteil. Ferner betrifft die Erfindung ein Abgasrohrsystem mit einer derartigen Rohrbride gemäß Anspruch 10.

Rohrbriden zum aneinander Fixieren von Verbrennungsluftrohren in Heizungs-Abgasrohrsystemen sind bekannt. Derartige Abgasrohrsysteme umfassen in der Regel zentrisch geführte Abgasrohre aus Kunststoff, die koaxial umgeben sind von ebenfalls aus Kunststoff ausgebildeten Verbrennungsluftrohren, durch welche dem Heizungsbrenner im Gegenstrom zu dem Abgas in den Abgasrohren Verbrennungsluft zugeführt wird. Bei den Abgasrohren handelt es sich um Muffenrohre, die über eine in der jeweiligen Muffe vorgesehene Ringdichtung gasdicht gegenüber den Verbrennungsluftrohren verschlossen bzw. miteinander verbunden sind. Die Verbrennungsluftrohre werden im Gegensatz zu den Abgasrohren in der Regel auf Stoß angeordnet und mechanisch aneinander mittels eines Zentrierrings fixiert, welcher radial innen von dem Abgasrohr durchsetzt wird und welcher in mantelseitige Öffnungen der Verbrennungsrohre zu deren axialer Sicherung rastend eingreift. Zu weiteren mechanischen Fixierungen bzw. Stabilisierung der Verbrennungsluftrohre werden die Stoßstellen von benachbarten Verbrennungsluftrohren umschlossen von sogenannten Rohrbriden, die im Wesentlichen aus einem geschlitzten Anlagering bestehen, der in geeigneter Weise um die Verbrennungsluftrohre verspannt wird, beispielsweise mittels einer Spannschnalle, wie dies in der DE 10 2012 102 545 A1 des Anmelders beschrieben ist.
Auf Gesetzgebungsebene bestehen Bestrebungen nicht nur für die Abgasrohre sondern zukünftig auch für die Verbrennungsluftrohre strengere Anforderungen an die Dichtheit von deren Verbindung zu stellen. Es besteht daher Bedarf an einfachen, kostengünstigen sowie leicht zu montierenden Dichtmitteln, die auch bei einer Montage der Verbrennungsluftrohre auf Stoß eine optimale Dichtheit gewährleisten.

Aus der US 2003/0205899 A1, der US 4,929,000 A und der FR 2 965 886 A1 sind gattungsgemäße Rohrbriden zum Umgreifen einer umlaufenden Stoßstelle zwischen zwei axial benachbarten Rohren bekannt. Insbesondere bei der aus der US 4,929,000 A ist es bekannt, die Rohrbride mit einem Überlappungsausschnitt auszustatten, der eine endseitige Zunge eines gegenüberliegenden Endbereichs radial außen in Umfangsrichtung überlappt, wobei der Überlappungsabschnitt im montierten Zustand die Zunge in beide Axialrichtungen übergreift sowie zu beiden Axialseiten der Zunge jeweils eine Anlagefläche aufweist, um sich axial neben der Zunge auf beiden Seiten der Stoßstelle mit jeweils einer Anlagefläche an den äußeren Mantelflächen der Rohre abzustützen. Der Überlappungsabschnitt ist in einer axialen Schnittebene U-förmig ausgebildet.
Ausgehend von den vorgenannten Stand der Technik liegt der Erfindung die Aufgabe zugrunde eine verbesserte Rohrbride zum Umschließen von Stoßstellen zweier benachbarter Verbrennungsluftrohre in Heizungsabgasrohrsystemen anzugeben, die eine erhöhte Dichtheit der Verbrennungsluftrohrverbindung gewährleisten. Weiterhin besteht die Aufgabe darin, ein entsprechend verbessertes Abgasrohrsystem, insbesondere aus Kunststoff für Heizungsanlagen anzugeben, das sich durch eine erhöhte Dichtheit der Verbrennungsluftrohrverbindung auszeichnet.

Diese Aufgabe wird hinsichtlich der Rohrbride mit dem Merkmal des Anspruchs 1 und hinsichtlich des Abgasrohrsystems mit dem Merkmal des Anspruchs 10 gelöst. Vorteilhafte Weiterbildungen der Erfindung sind in den Unteransprüchen angegeben. In den Rahmen der Erfindung fallen sämtliche Kombinationen aus zumindest zwei aus in der Beschreibung vorkommenden Ansprüchen und/oder in den Figuren offenbarten Merkmalen.

Der Erfindung liegt der Gedanke zugrunde, eine verbesserte Dichtwirkung der Rohrbride dadurch zu erreichen, dass ein Überlappungsabschnitt, der im montierten Zustand die Zunge eines in Umfangsrichtung gegenüberliegenden freien Endes des Anlagerings übergreift so auszubilden, dass der Überlappungsabschnitt vorgenannte Zunge im montierten Zustand in beide Axialrichtungen, d.h. in Richtungen der Verbrennungsluftrohr Längserstreckungen übergreift und mit diesen übergreifenden Abschnitten nach radial innen geführt ist, so dass ich der Überlappungsabschnitt zu beiden Axialseiten der Zunge und damit zu beiden Seiten der umlaufenden Stoßstelle der Verbrennungsluftrohre in radialer Richtung an den Verbrennungsluftrohren abstützt und zwar an jedem Verbrennungsluftrohr mit jeweils einer Anlagefläche. Durch die erfindungsgemäße Maßnahme wird eine Art Labyrinthdichtung gebildet, wobei benachbart zu jeder Axialseite der Zunge ein radial nach außen geschlossener von dem Überlappungsabschnitt überdeckter bzw. geschlossener, sich in radialer Richtung sowie in Umfangsrichtung erstreckender Spalt zwischen der Zunge und den die Zunge in axialer Richtung überlappenden Bereichen des Überlappungsabschnittes gebildet wird. Bevorzugt ist der Überlappungsabschnitt bzw. dessen Anlageflächen so ausgebildet und angeordnet, dass die Anlageflächen und die Zunge sowie eine Innenmantelseite des Anlagebereichs im montierten Zustand auf einer gedachten Zylindermantelfläche liegen, so dass sich die Rohrbride mit dem Anlagering, der Zunge sowie mit dem Überlappungsabschnitt in den axial zu der Zunge benachbarten Bereichen an der Verbrennungsluftrohrmantelfläche der axial benachbarten Verbrennungsluftrohre abstützt. Anders ausgedrückt liegen die Anlageflächen des Überlappungsabschnittes im montierten Zustand der Rohrbride bevorzugt auf demselben Radius wie eine Innenseite der Zunge.

Durch die bevorzugte Ausbildung der Rohrbride aus Kunststoff, insbesondere als Kunststoffspritzgussteil, ergibt sich eine gewisse Flexibilität des Bauteils, die dem Ausgleich unterschiedlicher Durchmessermaße zweier benachbarter Verbrennungsluftrohre zuträglich ist.

Erfindungsgemäß wird konstruktiv einfach eine wie zuvor beschriebene Ausgestaltung des Überlappungsabschnittes dadurch erreicht, dass der Überlappungsabschnitt in einer axialen (sich axial erstreckenden und vorzugsweise in einer Längsmittelachse der Bride aufnehmenden Radialebene liegenden) Schnittebene U-förmig ausgebildet ist, also zwei axial beabstandete Schenkel aufweist, die radial innen jeweils eine Anlagefläche ausbilden, wobei die Zunge so dimensioniert ist, dass sie zwischen den Schenkeln aufgenommen werden kann, erfindungsgemäß derart, dass sich die Zunge im montierten Zustand an die abgeschrägte, radiale Innenseite der Schenkel anlegt und bevorzugt auch an dem rechtwinklig zu den beiden Schenkeln verlaufenden und die Zunge radial außen überdeckenden Basisschenkel des Überlappungsabschnittes, um so die Dichtwirkung zu erhöhen. Erfindungsgemäß ist vorgesehen, dass die in axialer Richtung gegenüberliegenden Schenkel des Us auf Ihrer der Zunge zugewandten radialen Innenseite (Anlageseite) schräg ausgebildet sind, d.h. winklig zur Radialen und zur Axialen verlaufen, wobei weiter vorgesehen ist, dass die Zunge eine entsprechend schräge formkongruente radiale Gegenfläche zu den abgeschrägten Seitenflächen der Schenkel aufweist, um somit die Kontaktfläche und damit die Dichtfläche zu erhöhen.

Die erfindungsgemäße Rohrbride ermöglicht es, toleranzbedingte Durchmesserunterschiede zwischen zwei benachbarten Verbrennungsluftrohren auszugleichen, insbesondere wenn diese durch unterschiedliche Herstellungstechniken produziert sind, beispielsweise eines der Verbrennungsluftrohre als Kunststoffspritzgussteil und ein benachbartes Verbrennungsluftrohr durch Extrusionsformen. Auch ermöglicht die Rohrbride trotz des vorgenannten möglichen Durchmesserunterschiedes und gegebenenfalls in der Praxis nicht parallelen Stirnflächen der aneinander anliegenden Verbrennungsluftrohren eine Abdichtung des axialen Spaltes zwischen den Verbrennungsluftrohren. Besonders wesentlich ist die durch die schrägen Kontaktflächen zwischen Zunge und Überlappungsabschnitt zurückzuführende Dichtwirkung. Mit anderen Worten kann die geforderte Dichtheit dadurch erreicht werden, dass sich die Schenkel des U-förmigen Überlappungsabschnittes im montierten Zustand der Rohrbride mit ihren inneren abgeschrägten Seitenflächen an korrespondierenden, abgeschrägten Seitenflächen der Zunge in radialer Richtung abstützen. Unter den "montierten Zustand der Rohrbride" ist zu verstehen, dass die Zunge axial zwischen den Schenkeln des Überlappungsabschnitts aufgenommen ist und bevorzugt die Fixiermittel angezogen bzw. gespannt sind.

Bevorzugt sind die abgeschrägten Seitenflächen der Schenkel, die über die Zunge voneinander beabstandet sind derart abgeschrägt, dass deren Abstand, radial außen nach radial innen zunimmt, dass also sich der Überlappungsabschnitt bzw. die von diesem gebildete Aufnahmetasche für die Zunge von radial außen nach radial innen in axialer Richtung verbreitert. Bevorzugt korrespondiert die Anordnung der abgeschrägten Seitenflächen der Zunge, sodass also sich die Zunge in axialer verbreitert, betrachtet von radial außen nach radial innen, sodass eine Art Keilverbindung zwischen dem Überlappungsabschnitt und der Zunge in radialer Richtung geschaffen wird.

Besonders bevorzugt ist es, wenn die Zunge im Rahmen einer Weiterbildung der Erfindung in axialer Richtung bezogen auf die Aufnahmeöffnung des U-förmigen Überlappungsabschnittes mit Übermaß in axialer Richtung gefertigt ist. Hieraus resultiert eine große Dichtflächenpressung zwischen den abgeschrägten Seitenflächen des Überlappungsabschnittes und den korrespondierenden Schrägflächen der Zunge.

Besonders bevorzugt ist eine Ausführungsform, bei der die Seitenflächen des Überlappungsabschnittes, die sich an den entsprechenden Gegenflächen der Zunge abstützend so abgeschrägt sind, dass deren Abstand in axialer Richtung von radial außen nach radial innen betrachtet zunimmt. Somit nimmt auch dann der Axialabstand der schrägen Gegenflächen der Zunge von radial außen nach radial innen zu. Ganz besonders bevorzugt ist es, wenn die Seitenflächen und die Gegenflächen, zumindest näherungsweise, vorzugsweise exakt, unter den gleichen Winkel zur Axialen oder Radialen verlaufen, wobei dieser Winkel bevorzugt aus einem Winkelbereich zwischen 10° und 80°, vorzugsweise zwischen 20° und 70°, noch weiter bevorzugt zwischen 30° und 60°, beispielsweise 45° gewählt ist.

Eine besonders gute Dichtwirkung zwischen Zunge und Überlappungsabschnitt kann dadurch erreicht werden, dass an der Zunge und/oder am Überlappungsabschnitt ein Dichtkamm angeformt, insbesondere angespritzt ist, noch weiter bevorzugt zwei in Umfangsrichtung nebeneinander angeordnete, weiter bevorzugt parallele Dichtkämme, wobei sich die Zunge mit mindestens einem Dichtkamm in radialer Richtung und/oder in den axialen Richtungen an dem Überlappungsabschnitt abstützt.

Besonders bevorzugt handelt es sich bei den mindestens einen Dichtkamm um eine linienförmige Erhebung, die bevorzugt mindestens näherungsweise keilförmig ausgebildet ist, d.h. sich in einer von der Zunge bzw. den Überlappungsabschnitt weg erstreckende Richtung (Höhenerstreckungsrichtung) nur zwischen 0,1 mm und 0,2mm bemessen ist. Bevorzugt ist mindestens ein Dichtkamm in radialer Richtung zwischen der Zunge und dem Überlappungsabschnitt vorgesehen und/oder in axialer Richtung, letzte Ausgestaltung insbesondere um eine verbesserte Abdichtung zwischen der Zunge und den axial benachbarten Schenkeln des in der Axialschnittansicht U-förmigen Überlappungsabschnittes zu gewährleisten.

Auf die vorerwähnten Dichtkämme kann auch gemäß einer alternativen, bevorzugten Ausführungsform bewusst verzichtet werden (dichtkammfrei). Besonders zweckmäßig ist es, wenn der Überlappungsabschnitt als in Umfangsrichtung hin zum gegenüberliegenden freien Ende offene Aufnahmetasche für die Zunge ausgebildet ist, die die Zunge zu beiden Axialseiten umschließt, wobei die in Umfangsrichtung der Zunge zugewandte Einführöffnung eine erleichterte Montage ermöglicht. Besonders zweckmäßig, jedoch nicht zwingend ist eine der Einführöffnung gegenüberliegende Begrenzungswand vorgesehen, die die Tasche in Umfangsrichtung begrenzt, um somit die Dichtwirkung weiter zu verbessern.

Zur erleichterten Montage und zur Vergrößerung der Dichtflächen ist es bevorzugt, wenn an der Zunge und/oder an dem Überlappungsabschnitt mindestens eine Einlaufschräge vorgesehen ist, derart, dass die Zunge in axialer Richtung und/oder in radialer Richtung zentrierbar ist.

Im Hinblick auf die konkrete Ausgestaltung der Fixiermittel zum Schließen des Anlagerings bei unterhalb des Überlappungsabschnittes aufgenommener Zunge gibt es unterschiedliche Möglichkeiten. Bevorzugt sind die Fixiermittel im Bereich der freien Enden des Anlagerings angeordnet und können beispielsweise wie in der DE 10 2012 102 545 A1 beschrieben ausgebildet sein und einen Spannhebel umfassen. Eine besonders gute mechanische Festigkeit wird dadurch erreicht, dass die Fixiermittel im Bereich der freien Enden des Anlagebereichs jeweils einen Radialfortsatz umfassen, wobei die Radialfortsätze mit Hilfe mindestens einer, bevorzugt mit mindestens zwei Schrauben in Umfangsrichtung aneinander fixierbar sind, wobei die Radialfortsätze aufgrund der Wirkung der Schraube in Umfangsrichtung aufeinander zu verstellbar und verspannbar sind. Dabei ist es ganz besonders bevorzugt, wenn die Fixiermittel ohne eine Schraubenmutter auskommen, sondern wenn in einem der Radialfortsätze eine innengewindefreie Durchgangsöffnung vorgesehen ist, deren Durchmesser geringer ist als ein Fixierschraubenkopf und zusätzlich in dem gegenüberliegenden Radialfortsatz eine Öffnung mit einem geringeren Durchmesser als in den gegenüberliegenden Radialfortsatz vorgesehen ist, um in diesen Radialfortsatz eine selbstschneidende Schraube eindrehen zu können.

Die erfindungsgemäße Rohrbride kommt ohne eine zusätzliche Elastomerdichtung aus. Deshalb ist es bevorzugt, wenn die Rohrbride keine Elastomerdichtungsaufnahme, beispielsweise in Form einer umlaufenden Nut aufweist. Insgesamt ist es besonders bevorzugt, wenn, wie später noch erläutert werden wird, im Rahmen des Abgasrohrsystems zwischen der Rohrbride und den Verbrennungsluftrohren keine von der Rohrbride separate Elastomerdichtung vorgesehen ist.

Die Erfindung führt auch auf ein Abgasrohrsystem, umfassend mindestens ein Abgasrohr, welches koaxial von mindestens zwei auf Stoß angeordneten Verbrennungsluftrohren umgeben ist, deren umlaufende Stoßstelle von einer Rohrbride gemäß dem Konzept der Erfindung umgriffen ist, derart, dass die von dem Überlappungsabschnitt radial außen überlappte Zunge auf der Stoßstelle aufliegt und sich der Überlappungsabschnitt zu beiden Axialseiten der Zunge auf der Mantelfläche der Verbrennungsluftrohre abstützt.

Bei dem erfindungsgemäßen Abgasrohrsystem stützt sich die Zunge in axialer sowie in radialer Richtung an den Seitenflächen der Schenkel des Überlappungsabschnittes ab, wobei die jeweiligen Dichtflächen, d.h. die abgeschrägten Seitenflächen des Überlappungsabschnittes sowie die korrespondierenden Schrägflächen der Zunge aneinander anliegen.

Weiterbildungsgemäß ist vorgesehen, dass die Verbrennungsluftrohre zusätzlich zu der Rohrbride gegen axiales Auseinanderbewegen gesichert sind, insbesondere mittels eines innerhalb der Verbrennungsluftrohre angeordneten Sicherungselementes, welches noch weiter bevorzugt in mantelseitige Öffnungen der Verbrennungsrohre einschnappt und diese so axial sichert. Bevorzugt ist das Sicherungselement ringförmig ausgestaltet und weist im Inneren eine das Abgasrohr aufnehmende bzw. führende Struktur auf.

Wie im Vorfeld bereits erwähnt ist es besonders bevorzugt, wenn die Rohrbride ohne zusätzliche Elastomerdichtung auskommt, d.h. dass sich die Rohrbride ohne Einschluss einer von der Rohrbride separaten Elastomerdichtung an den Verbrennungsluftrohren abstützt.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1 - 7: unterschiedliche, teilweise geschnittene Ansichten einer nach dem Konzept der Erfindung ausgebildeten Rohrbride, und
- Fig. 8 - 10: zwei auf Stoß angeordnete Verbrennungsluftrohre, deren Stoßstelle von einer nach dem Konzept der Erfindung ausgebildeten Rohrbride umgriffen sind, wobei aus Übersichtlichkeitsgründen auf die Darstellung des koaxial aufgenommenen Abgasrohres verzichtet wurde.

In den Figuren sind gleiche Elemente und Elemente mit der gleichen Funktion mit den gleichen Bezugszeichen gekennzeichnet.

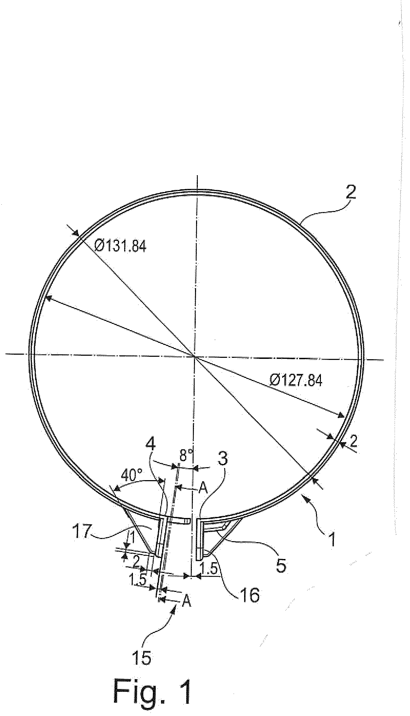

In den Fig. 1 - 7 ist eine als Kunststoffspritzgussteil teilausgebildete Rohrbride 1 für ein Abgasrohrsystem von Heizungsanlagen gezeigt. Die Rohrbride 1 umfasst einen verschließbaren, im montierten Zustand im Wesentlichen zylindrischen Anlagering 2, welcher geschlitzt ausgebildet ist, d.h. öffenbar ausgestaltet ist und hierzu zwei freie Enden aufweist, nämlich einen ersten freien Endbereich 3 und einen zweiten freien Endbereich 4. Am ersten freien Endbereich 4 ist ein aufnahmetaschenförmiger Überlappungsabschnitt 5 ausgebildet, der im montierten Zustand eine Zunge des zweiten freien Endbereichs 6 aufnimmt und sowohl radial außen überlappt sowie in beide Axialrichtungen 7, 8.

Zu diesem Zweck ist der Überlappungsabschnitt 5 in einer Axialschnittansicht U-förmig ausgestaltet und weist zwei in axialer Richtung beabstandete Schenkel 9, 10 auf, die die Zunge in axialer Richtung überragen und die radial innen jeweils eine Anlagefläche 11, 12 aufweisen, mit denen der Überlappungsabschnitt 5 zu beiden Axialseiten der Zunge 6 im montierten Zustand an den Verbrennungsluftrohren anliegt. Dabei befinden sich die Anlageflächen 11, 12 auf demselben Radius wie eine Innenseite der Zunge 6.

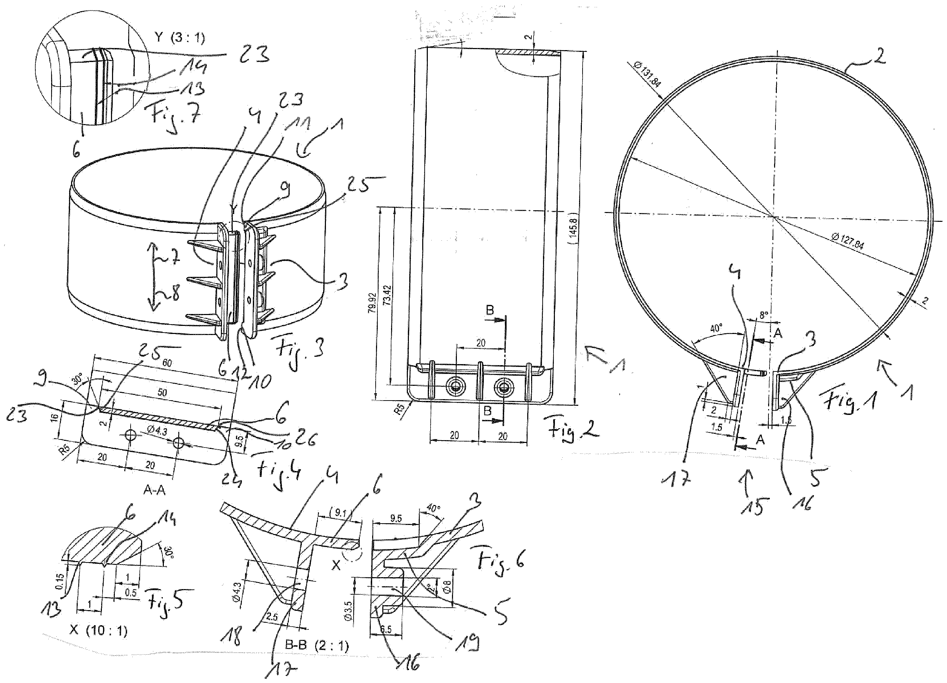

In Fig. 4 ist zu erkennen, dass sich die Zunge 6 mit axial beabstandeten und sich in Umfangsrichtung erstreckenden Gegenflächen 23, 24 in axialer und vor allem radialer Richtung an inneren schrägen Seitenflächen 25, 26 des Überlappungsabschnittes 5 abstützt. Eine der Gegenflächen 23 ist in Fig. 7 vergrößert dargestellt. Zu erkennen ist die schräge Ausbildung, d.h. winklige Anordnung sowohl zur Axialen als auch zur Radialen.

In Fig. 4 ist zu erkennen, dass die Seiten- und Gegenflächen unter dem gleichen Winkel, von hier beispielhaft 30° zu einer Radialen geneigt sind.

Aus Fig. 4 ist weiter zu erkennen, dass der Axialabstand zwischen den Seitenflächen 25, 26 und korrespondierend zwischen den Gegenflächen 23, 24 von radial außen, d.h. in der Zeichnungsebene hier unten, nach radial innen zunimmt. Nicht zu erkennen in der gewählten Darstellung ist das bevorzugte Übermaß der Zunge 6 zur Erhöhung der Flächenpressung zwischen den korrespondierenden schrägen Flächen 23, 25 bzw. 24, 26. In axialer Richtung betrachtet folgt also auf einen Schenkel 9 mit innerer schräger Seitenfläche 25 eine sich axial und radial daran abstützende schräge Gegenfläche 23 der Zunge, dann ein Vollmaterialabschnitt der Zunge, dann eine weitere schräge Gegenfläche 26 der Zunge, die sich axial und radial abstützt an einer inneren schrägen Seitenfläche 24 eines Schenkels 10 des Überlappungsabschnittes 5.

In den Detailansichten gemäß den Fig. 5 und 7 ist zu erkennen, dass an der Zunge 6 (alternativ am Innenumfang des Überlappungsabschnittes 5) zwei parallele Dichtkämme 13 vorgesehen sind. Hierbei handelt es sich um Anspritzungen, die einteilig mit der Zunge 6 ausgebildet sind und die, wie sich aus Fig. 5 ergibt, eine geringe Höhenerstreckung in Richtung von der Zunge weg aufweisend von hier beispielhaft und bevorzugt 0,15 mm. Zu erkennen ist weiter, dass die Dichtkämme 13, 14 so angeordnet sind, dass sich die Zunge 6 über die Dichtkämme 13, 14 nicht nur in radialer Richtung sondern auch in axialer Richtung an den Überlappungsabschnitt abstützen kann - in axialer Richtung an den Schenkeln 9, 10 des Überlappungsabschnittes. Ferner ist zu erkennen, dass im Bereich der freien Endbereiche 3, 4 Fixiermittel 15 zum verspannen der Rohrbride 1 und der Verbrennungsluftrohre vorgesehen sind. Die Fixiermittel 15 umfassen zwei Radialfortsätze, nämlich einen ersten Radialfortsatz 16 im Bereich des ersten freien Endes und einen zweiten Radialfortsatz 17 in Umfangsrichtung gegenüberliegend im Bereich des zweiten freien Endes.

Es ist auch eine Ausführungsform ohne die vorgenannten Dichtkämme realisierbar.

Wie sich aus Fig. 6 ergibt, sind im zweiten Radialfortsatz Durchgangsöffnungen 18 zum Durchstecken einer als Kopfschraube ausgebildeten Fixierschraube vorgesehen. In Umfangsrichtung hiermit fluchten Einschrauböffnungen 19 am ersten Radialfortsatz, wobei der Durchmesser der Einschrauböffnungen 19 geringer ist als der der Durchgangsöffnungen 18, um somit genügend "Fleisch" zu haben, um hier rein eine selbstschneidende Fixierschraube eindrehen zu können.

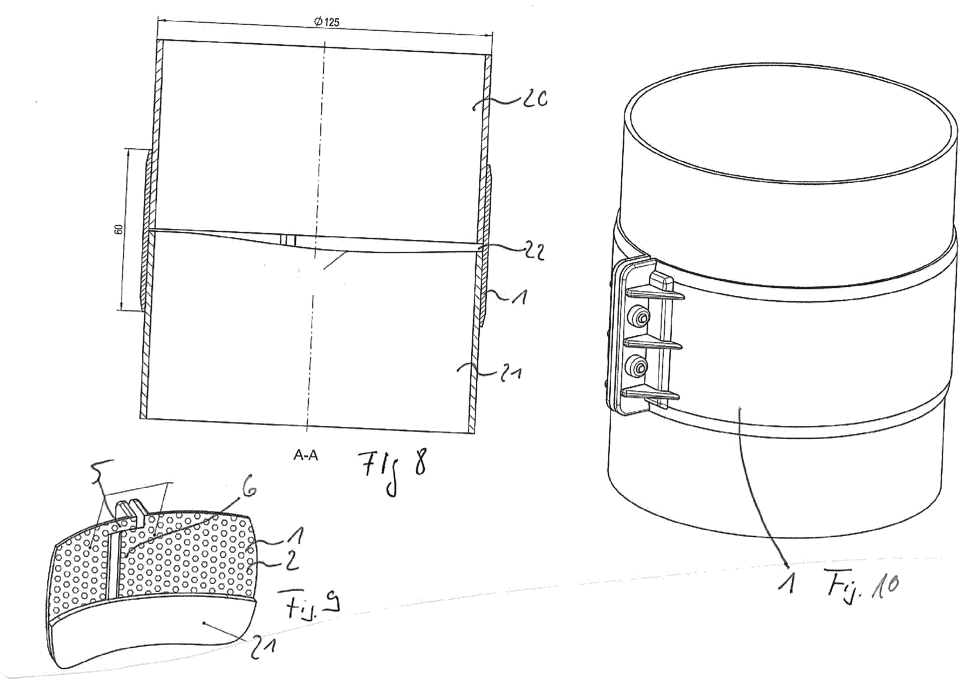

In den Fig. 8 - 10 ist die Rohrbride 1 gemäß den Fig. 1 - 7 im montierten Zustand gezeigt. Zu erkennen sind zwei auf Stoß angeordnete Verbrennungsluftrohre 20, 21, die eine umlaufende Stoßstelle 22 begrenzen, die umschlossen ist von der Rohrbride 1.

In Fig. 9 ist zu erkennen, dass die Rohrbride 1 sowohl mit Ihrer Zunge 6 als auch mit dem Überlappungsabschnitt 5 axial benachbart zu der Zunge am Verbrennungsluftrohr aufliegt, ebenso wie mit dem Anlagering 2, in Umfangsrichtung benachbart zu den Endbereichen 3,4.

### Bezugszeichenliste:

- 1: Rohrbride
- 2: Anlagering
- 3: erster freier Endbereich
- 4: zweiter freier Endbereich
- 5: Überlappungsabschnitt
- 6: Zunge
- 7: Axialrichtung
- 8: Axialrichtung
- 9: Schenkel
- 10: Schenkel
- 11: Anlagefläche
- 12: Anlagefläche
- 13: Dichtkamm
- 14: Dichtkamm
- 15: Fixiermittel
- 16: erster Radialfortsatz
- 17: zweiter Radialfortsatz
- 18: Durchgangsöffnung
- 19: Einschrauböffnung
- 20: Verbrennungsluftrohr
- 21: Verbrennungsluftrohr
- 22: Stoßstelle
- 23: Gegenfläche der Zunge
- 24: Gegenfläche der Zunge
- 25: schräge Seitenfläche des Überlappungsabschnitts
- 26: schräge Seitenfläche des Überlappungsabschnitts

## Patentansprüche

1. Rohrbride zum Umgreifen einer umlaufenden Stoßstelle zwischen zwei axial benachbarten Verbrennungsluftrohren (20, 21) eines Abgasrohrsystems einer Heizungsanlage mit einem Anlagering (2) zur Anlage an Mantelflächen beider Verbrennungsluftrohre, welcher mit Fixiermitteln (15) um die Verbrennungsluftrohre verspannbar ist, wobei der Anlagering (2) zum Öffnen des Anlagerings (2) zu Montagezwecken einen ersten sowie einen zweiten freien Endbereich (3, 4) aufweist, und wobei im montierten Zustand ein endseitiger Überlappungsabschnitt (5) des ersten Endbereichs (3) eine endseitige Zunge (6) des zweiten Endbereichs (4) radial außen in Umfangsrichtung überlappt, und wobei der Überlappungsabschnitt (5) im montierten Zustand die Zunge (6) in beide Axialrichtungen (7, 8) übergreift sowie zu beiden Axialseiten der Zunge (6) jeweils eine Anlagefläche (11, 12) aufweist, um sich axial neben der Zunge (6) auf beiden Seiten der Stoßstelle mit jeweils einer Anlagefläche (11, 12) an den äußeren Mantelflächen der Verbrennungsluftrohre (20, 21) abzustützen, und wobei der Überlappungsabschnitt (5) in einer axialen Schnittebene U-förmig ausgebildet ist
**dadurch gekennzeichnet,**
**dass** der Überlappungsabschnitt (5) zwei axial über die Zunge (6) voneinander beabstandete, innen abgeschrägte Seitenflächen (24,25) aufweisende Schenkel (9,10) aufweist, die endseitig jeweils eine der Anlageflächen (11, 12) ausbilden, und dass sich die Zunge (6) im montierten Zustand der Rohrbride an den abgeschrägten Seitenflä-(24,25) mit zu den Seitenflächen formkongruenten, schrägen Gegenflächen (23,26) abstützt.

2. Rohrbride nach Anspruch 1,
**dadurch gekennzeichnet,**
**dass** die Axialerstreckung der Zunge (6) größer ist als der Axialabstand der abgeschrägten Seitenflächen des Überlappungsabschnitts, um die Flächenpressung zwischen den abgeschrägten Seitenflächen und den Gegenflächen zu erhöhen.

3. Rohrbride nach einem der Ansprüche 1 oder 2,
**dadurch gekennzeichnet,**
**dass** die Anlageflächen (11, 12) bei nicht vollständig gespannten Fixiermitteln und bei axial zwischen den Schenkeln (9, 10) aufgenommener Zunge (6) in radialer Richtung von einer radialen Innenseite der Zunge (6) beabstandet sind.

4. Rohrbride nach einem der vorhergehenden Ansprüche,
**dadurch gekennzeichnet,**
**dass** der Überlappungsabschnitt (5) als Aufnahmetasche für die Zunge (6) ausgebildet ist, die die Zunge (6) zu beiden Axialseiten umschließt und die eine Einführöffnung zum Einschieben der Zunge (6) aufweist sowie ggf. eine der Einführöffnung in Umfangsrichtung gegenüberliegende Begrenzungswand.

5. Rohrbride nach Anspruch 4,
**dadurch gekennzeichnet,**
**dass** an der Zunge (6) und/oder an dem Überlappungsabschnitt (5) mindestens eine Einlaufschräge vorgesehen ist um die Zunge (6) beim Einführen in die Aufnahmetasche in axialer Richtung und/oder in radialer Richtung zu zentrieren.

6. Rohrbride nach einem der vorhergehenden Ansprüche,
**dadurch gekennzeichnet,**
**dass** die Fixiermittel (15) einen ersten Radialfortsatz (16) im Bereich des ersten freien Endbereichs (3) und einen zweiten Radialfortsatz (17) umfassen, die, insbesondere über mindestens eine Schraube, in Umfangsrichtung aneinander fixierbar sind.

7. Rohrbride nach einem der vorhergehenden Ansprüche,
**dadurch gekennzeichnet,**
**dass** die Fixiermittel (15) eine Einschrauböffnung (19) zur Aufnahme einer selbstschneidenden Fixierschraube aufweisen.

8. Rohrbride nach einem der vorhergehenden Ansprüche,
**dadurch gekennzeichnet,**
**dass** die Rohrbride (1) als Kunststoffspritzgussteil ausgebildet ist.

9. Rohrbride nach einem der vorhergehenden Ansprüche,
**dadurch gekennzeichnet,**
**dass** die Rohrbride (1) keine Elastomerdichtungsaufnahme aufweist.

10. Abgasrohrsystem mit mindestens einem Abgasrohr, welches koaxial von mindestens zwei auf Stoß angeordneten Verbrennungsluftrohren (20, 21) umgeben ist, deren umlaufende Stoßstelle (22) von einer Rohrbride (1) nach einem der vorhergehenden Ansprüche umgriffen ist, derart dass die von dem Überlappungsabschnitt (5) radial außen überlappte Zunge (6) auf der Stoßstelle (22) auflegt und sich der Überlappungsabschnitt (5) zu beiden Axialseiten der Zunge (6) auf den Mantelflächen der Verbrennungsluftrohre (20, 21) abstützt.

11. Abgasrohrsystem nach Anspruch 10,
**dadurch gekennzeichnet,**
**dass** in den Verbrennungsluftrohren (20, 21) ein, insbesondere ringförmiges, axiales Sicherungselement vorgesehen ist, das beide Verbrennungsluftrohre (20, 21) gegen axiales Auseinanderbewegungen, insbesondere durch Formschluss, bevorzugt durch Verrasten, mit den beiden Verbrennungsluftrohren (20, 21) sichert, wobei die axialen Sicherungsmittel bevorzugt gleichzeitig des Abgasrohr führen und/oder zentrieren.

12. Abgasrohrsystem nach einem der Ansprüche 10 oder 11,
**dadurch gekennzeichnet,**
**dass** die Rohrbride (1) ohne Einschluss einer von der Rohrbride (1) separaten Elastomerdichtung an den Verbrennungsluftrohren (20, 21) anliegt.

## Claims

1. A pipe clamp for encompassing a circumferential butt joint between two axially adjacent combustion air pipes (20, 21) of a flue gas pipe system of a heating installation, having a fitting ring (2) to fit on curved surfaces of both combustion air pipes, which can be tensioned around the combustion air pipes with fixing means (15), wherein, in order to open the fitting ring (2) for the purposes of assembly, the fitting ring (2) is provided with a first as well as a second free end region (3, 4), and wherein, when in the assembled condition, an end overlapping section (5) of the first end region (3) overlaps an end tongue (6) of the second end region (4) radially outwardly in the circumferential direction, and wherein the overlapping section (5), in the assembled condition, overlaps the tongue (6) in both axial directions (7, 8) and is also provided with a respective fitting surface (11, 12) on both axial sides of the tongue (6), in order to provide axial support close to the tongue (6) on both sides of the butt joint with a respective fitting surface (11, 12) on the outer curved surfaces of the combustion air pipes (20, 21), and wherein the overlapping section (5) is U-shaped in an axial sectional plane,
**characterized in that**
the overlapping section (5) is provided with two limbs (9, 10) provided with inwardly chamfered side faces (24, 25) which are axially separated from each other by the tongue (6), the ends thereof respectively forming one of the fitting surfaces (11, 12), and **in that** when the pipe clamp is in the assembled condition, the tongue (6) is supported on the chamfered side faces (24, 25) with inclined mating surfaces which match the shape of the side faces.

2. The pipe clamp as claimed in claim 1,
**characterized in that**
the axial extent of the tongue (6) is greater than the axial separation of the chamfered side faces of the overlapping section, in order to increase the surface pressure between the chamfered side faces and the mating surfaces.

3. The pipe clamp as claimed in claim 1 or claim 2,
**characterized in that**
when the fixing means have not been tensioned completely and when the tongue (6) is accommodated axially between the limbs (9, 10), the fitting surfaces (11, 12) are separated from a radial inner side of the tongue (6) in the radial direction.

4. The pipe clamp as claimed in one of the preceding claims,
**characterized in that**
the overlapping section (5) is configured as a receiving pocket for the tongue (6) which surrounds the tongue (6) on both axial sides and which is provided with an insertion opening for pushing the tongue (6) in as well as, if necessary, a boundary wall opposite to the insertion opening in the circumferential direction.

5. The pipe clamp as claimed in claim 4,
**characterized in that**
at least one guide chamfer is provided on the tongue (6) and/or on the overlapping section (5) in order to centre the tongue (6) in the axial direction and/or in the radial direction when inserting it into the receiving pocket.

6. The pipe clamp as claimed in one of the preceding claims,
**characterized in that**
the fixing means (15) comprise a first radial extension (16) in the region of the first free end region (3) and a second radial extension (17) which can be fixed to each other in the circumferential direction, in particular by means of at least one screw.

7. The pipe clamp as claimed in one of the preceding claims,
**characterized in that**
the fixing means (15) are provided with a screw opening (19) in order to accommodate a self-tapping fixing screw.

8. The pipe clamp as claimed in one of the preceding claims,
**characterized in that**
the pipe clamp (1) is formed as an injection moulded plastic part.

9. The pipe clamp as claimed in one of the preceding claims,
**characterized in that**
the pipe clamp (1) is not provided with an elastomeric seal seat.

10. A flue gas pipe system with at least one flue gas pipe which is coaxially surrounded by at least two combustion air pipes (20, 21) which are disposed in abutment, the circumferential butt joint (22) of which being encompassed by a pipe clamp (1) as claimed in one of the preceding claims in a manner such that the tongue (6) which is outwardly radially overlapped by the overlapping section (5) sits on the butt joint (22) and supports the overlapping section (5) on the curved surfaces of the combustion air pipes (20, 21) on both axial sides of the tongue (6).

11. The flue gas pipe system as claimed in claim 10,
**characterized in that**
an axial securing element, which in particular is annular, is provided in the combustion air pipes (20, 21) which secures both of the combustion air pipes (20, 21) against axial separating movements, in particular by being form-fitting, preferably by snapfitting with the two combustion air pipes (20, 21), wherein the axial securing means preferably simultaneously guides and/or centres the flue gas pipe.

12. The flue gas pipe system as claimed in claim 10 or claim 11,
**characterized in that**
the pipe clamp (1) is seated on the combustion air pipes (20, 21) without the inclusion of an elastomeric seal which is separate from the pipe clamp (1).

## Revendications

1. Bride tubulaire destinée à venir en prise autour d'une zone de butée périphérique entre deux tuyaux d'air de combustion axialement adjacents (20, 21) d'un système de tuyau d'échappement d'une installation de chauffage comprenant une bague d'appui (2) destinée à s'appliquer contre des surfaces d'enveloppe des deux tuyaux d'air de combustion, qui peut être serrée avec des moyens de fixation (15) autour des tuyaux d'air de combustion, la bague d'appui (2) présentant une première et une deuxième région d'extrémité libre (3, 4) pour l'ouverture de la bague d'appui (2) à des fins de montage et, dans l'état monté, une portion de chevauchement (5) du côté de l'extrémité de la première région d'extrémité (3) chevauchant une langue (6) du côté de l'extrémité de la deuxième région d'extrémité (4) radialement à l'extérieur dans la direction périphérique, et la portion de chevauchement (5), dans l'état monté, venant en prise par-dessus la langue (6) dans les deux directions axiales (7, 8) et présentant vers les deux côtés axiaux de la langue (6), à chaque fois une surface d'appui (11, 12), afin de s'appuyer axialement à côté de la langue (6) sur les deux côtés de la zone de butée par une surface d'appui respective (11, 12) contre les surfaces d'enveloppe extérieures des tuyaux d'air de combustion (20, 21), et la portion de chevauchement (5) étant réalisée en forme de U en plan en coupe axiale, **caractérisée en ce que** la portion de chevauchement (5) présente deux branches (9, 10) espacées l'une de l'autre axialement par le biais de la langue (6), présentant des surfaces latérales biseautées (24, 25), qui constituent du côté de l'extrémité à chaque fois l'une des surfaces d'appui (11, 12), et **en ce que** la langue (6), dans l'état monté de la bride tubulaire, s'appuie contre les surfaces latérales biseautées (24, 25) avec des surfaces conjuguées obliques (23, 26) ayant une forme coïncidant avec les surfaces latérales.

2. Bride tubulaire selon la revendication 1, **caractérisée en ce que** l'étendue axiale de la langue (6) est supérieure à la distance axiale des surfaces latérales biseautées de la portion de chevauchement, afin d'augmenter la pression de surface entre les surfaces latérales biseautées et les surfaces conjuguées.

3. Bride tubulaire selon l'une quelconque des revendications 1 ou 2, **caractérisée en ce que** les surfaces d'appui (11, 12), lorsque les moyens de fixation ne sont pas complètement serrés, et lorsque la langue (6) est reçue axialement entre les branches (9, 10), sont espacées dans la direction radiale d'un côté intérieur radial de la langue (6).

4. Bride tubulaire selon l'une quelconque des revendications précédentes, **caractérisée en ce que** la portion de chevauchement (5) est réalisée sous forme de poche de logement pour la langue (6), qui entoure la langue (6) des deux côtés axiaux et qui présente une ouverture d'introduction pour l'enfoncement de la langue (6), et éventuellement une paroi de limitation opposée à l'ouverture d'introduction dans la direction périphérique.

5. Bride tubulaire selon la revendication 4, **caractérisée en ce qu'**au moins un biseau d'introduction est prévu au niveau de la langue (6) et/ou au niveau de la portion de chevauchement (5), afin de centrer la langue (6) dans la direction axiale et/ou dans la direction radiale lors de l'introduction dans la poche de réception.

6. Bride tubulaire selon l'une quelconque des revendications précédentes, **caractérisée en ce que** les moyens de fixation (15) comprennent une première saillie radiale (16) dans la région de la première région d'extrémité libre (3) et une deuxième saillie radiale (17), lesquelles peuvent être fixées l'une contre l'autre dans la direction périphérique en particulier par le biais d'au moins une vis.

7. Bride tubulaire selon l'une quelconque des revendications précédentes, **caractérisée en ce que** les moyens de fixation (15) présentent une ouverture de vissage (19) pour recevoir une vis de fixation autotaraudeuse.

8. Bride de fixation selon l'une quelconque des revendications précédentes, **caractérisée en ce que** la bride tubulaire (1) est réalisée sous forme de pièce moulée par injection de plastique.

9. Bride tubulaire selon l'une quelconque des revendications précédentes, **caractérisée en ce que** la bride tubulaire (1) ne présente pas de logement pour un joint élastomère.

10. Système de tuyau d'échappement comprenant au moins un tuyau d'échappement, qui est entouré coaxialement par au moins deux tuyaux d'air de combustion (20, 21) disposés en aboutement l'un contre l'autre, dont la zone de butée (22) périphérique est saisie sur son pourtour par une bride tubulaire (1) selon l'une quelconque des revendications précédentes de telle sorte que la langue (6) chevauchée radialement à l'extérieur par la portion de chevauchement (5) repose sur la zone de butée (22) et que la portion de chevauchement (5) s'appuie des deux côtés axiaux de la langue (6) contre les surfaces d'enveloppe des tuyaux d'air de combustion (20, 21).

11. Système de tuyau d'échappement selon la revendication 10, **caractérisé en ce que** dans les tuyaux d'air de combustion (20, 21) est prévu un élément de fixation axial, notamment en forme de bague, qui fixe les deux tuyaux d'air de combustion (20, 21) à l'encontre de déplacements axiaux à l'écart, l'un de l'autre, en particulier par engagement par correspondance de formes, de préférence par encliquetage, aux deux tuyaux d'air de combustion (20, 21), les moyens de fixation axiaux guidant et/ou centrant de préférence simultanément le tuyau d'échappement.

12. Système de tuyau d'échappement selon l'une quelconque des revendications 10 ou 11, **caractérisé en ce que** la bride tubulaire (1) s'applique contre les tuyaux d'air de combustion (20, 21) sans incorporer un joint d'étanchéité élastomère séparé de la bride tubulaire (1).
